# EUROPÄISCHE PATENTSCHRIFT

(11) **EP 0 380 015 B1**
(45) Veröffentlichungstag und Bekanntmachung des Hinweises auf die Patenterteilung: **07.09.1994**
(21) Anmeldenummer: 90101190.8
(22) Anmeldetag: 22.01.1990
(51) Int. Cl.: B29C 47/20, B29C 47/06

(54) **Verfahren und Vorrichtung zur diskontinuierlichen Herstellung mehrschichtiger, coextrudierter, schlauchartiger Vorformlinge aus thermoplastischem Kunststoff**
Method and apparatus for discontinuously manufacturing multilayered co-extruded tubular preforms made of thermoplastics
Procédé et dispositif de fabrication discontinue de préformes tubulaires coextrudées multicouches en matière thermoplastique

(30) Priorität: 26.01.1989 DE 3902270
(43) Veröffentlichungstag der Anmeldung: 01.08.1990
(73) Patentinhaber: RICHTER, Günther, D-57610 Altenkirchen (DE)
(72) Erfinder: RICHTER, Günther, D-57610 Altenkirchen (DE)
(74) Vertreter: Kossobutzki, Walter, Dipl.-Ing.(FH)

(56) Entgegenhaltungen:
- EP-A- 0 076 366
- EP-A- 0 249 866
- EP-A- 0 279 321
- EP-A- 0 298 908
- WO-A-88/02689
- DE-A- 2 712 910
- FR-A- 2 369 923
- US-A- 3 692 447
- US-A- 3 734 662

## Beschreibung

Die Erfindung bezieht sich auf ein Verfahren zur diskontinuierlichen Herstellung mehrschichtiger, coextrudierter, schlauchartiger Vorformlinge aus thermoplastischem Kunststoff zur Bildung großvolumiger, mehrschichtiger Hohlkörper in einer geteilten Blasform, bei dem mindestens zwei unterschiedliche, ringförmige Materialschmelzen mittig eines Ringkolbens nacheinander und in Extrusionsrichtung zu einer mehrschichtigen Materialschmelze zusammengeführt werden und bei dem diese mehrschichtige Materialschmelze sich trichterförmig erweiternd in einen Ringspeicherraum fließt und anschließend durch den in axialer Richtung bewegbaren Ringkolben, der als Coextrusionskopf wirkt und von der mehrschichtigen Materialschmelze nach oben gedrückt wird, über einen Ringdüsenspalt ausgestoßen wird, sowie auf eine Vorrichtung zur Durchführung dieses Verfahrens.

Ein derartiges Verfahren und eine zur Durchführung dieses Verfahrens geeignete Vorrichtung sind aus der DE-OS 36 35 334 bekannt. Hier sind die einzelnen Extruder in tangentialer Richtung an dem Coextrusionskopf bzw. dessen Ringkolben angeschlossen. Das bedeutet, daß auch die von dem jeweiligen Extruder abgegebene Materialschmelze tangential in den bewegbaren Ringkolben mündet. Bei der axialen Verschiebung des Ringkolbens werden die Extruder verschwenkt. Diese Verschwenkbewegung der Extruder führt dazu, daß im Übergangsbereich zwischen dem Ausströmkanal des jeweiligen Extruders und dem entsprechenden Einströmkanal des Ringkolbens eine Querschnittsveränderung auftritt, die sich nachteilig auf den herzustellenden, schlauchartigen Vorformling auswirkt. Dies kann beispielsweise dazu führen, daß der Vorformling im Bereich der Fließlinien der einzelnen Materialschmelzen Schwachstellen aufweist, die beim Aufblasen des Vorformlings zu einer erheblichen Beeinträchtigung der Schichtdicke und gegebenenfalls sogar zu einer Zerstörung der entsprechenden Schicht führen können. Damit wird der fertige Hohlkörper unbrauchbar.

Der Erfindung liegt deshalb die Aufgabe zugrunde, das bekannte Verfahren so zu verbessern, daß im Übergangsbereich zwischen dem jeweiligen Extruder und dem Ringkolben keinerlei Querschnittsveränderungen mehr auftreten, so daß Schwachstellen vermieden bzw. so stark reduziert werden, daß sie sich nicht mehr nachteilig auf den fertigen Hohlkörper auswirken.

Zur Lösung dieser Aufgabe wird gemäß der Erfindung bei einem Verfahren der eingangs beschriebenen Gattung vorgeschlagen, daß die einzelnen Materialschmelzen vor ihrem Eintritt in den Coextrusionskopf aus ihrer Extrusionsrichtung umgelenkt werden und radial in die entsprechenden Fließkanäle des Ringkolbens einströmen. Dadurch werden die Extruder nicht mehr radial zum Ringkolben, sondern parallel dazu versetzt angeordnet. Die Extrusionsrichtung der Materialschmelzen verläuft jetzt zunächst radial versetzt zum Ringkolben und wird vor dem Eintritt in den Ringkolben umgelenkt. Diese Umlenkung erfolgt über einen Winkel von etwa 90 Grad bis 135 Grad. Im Übergangsbereich zwischen einem Extruder und dem Ringkolben findet jetzt zwischen den fluchtenden Kanälen nur noch eine Drehbewegung um eine Achse statt, die jegliche Querschnittsveränderung ausschließt.

Weitere Merkmale des Verfahrens gemäß der Erfindung sowie einer Vorrichtung zur Durchführung des Verfahrens sind in den Ansprüchen 2 - 10 offenbart.

Die Erfindung wird nachfolgend anhand eines in einer Zeichnung in vereinfachter Weise dargestellten Ausführungsbeispieles näher erläutert. Dabei zeigen
Fig. 1 eine Aufrißdarstellung einer Vorrichtung gemäß der Erfindung im Schnitt und
Fig. 2 einen Schnitt durch die Vorrichtung der Fig. 1 in zwei unterschiedlichen Ebenen.

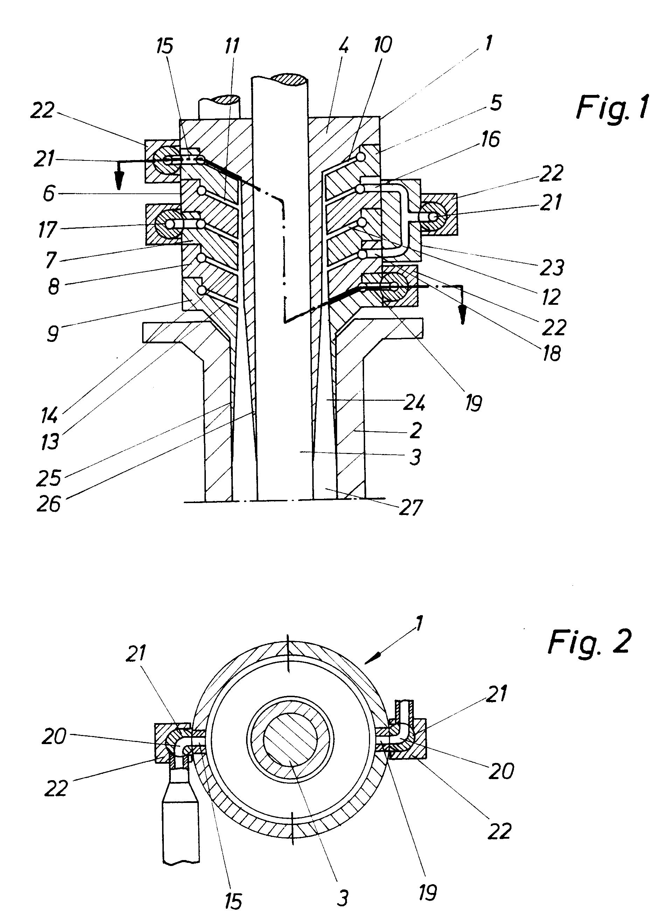

In den Fign. 1 und 2 der Zeichnung ist eine Vorrichtung dargestellt, die zur Herstellung mehrschichtiger, coextrudierter, schlauchartiger Vorformlinge aus thermoplastischem Kunststoff zur Bildung großvolumiger, mehrschichtiger Hohlkörper in einer geteilten Blasform dient. Dabei wird die Wandung des herzustellenden schlauchartigen Vorformlings und damit auch die Wandung des späteren Hohlkörpers aus fünf Materialschmelzen gebildet.

Die Vorrichtung besteht aus einem mehrteiligen, als Coextrusionskopf wirkenden Ringkolben 1, der in einem nur angedeuteten Speichermantel 2 eines nicht weiter gezeichneten Gehäuses axial verschiebbar geführt ist. Innerhalb des Speichermantels 2 ist eine Pinole 3 axial verschiebbar angeordnet, die sich zentrisch durch den Ringkolben 1 erstreckt. Damit dient die Pinole 3 auch zusätzlich zur Führung des Ringkolbens 1. Dem Ringkolben 1 und der Pinole 3 sind an sich bekannte, nicht dargestellte Verschiebeantriebe zugeordnet, die mit einem flüssigen Druckmittel beaufschlagbar sind.

Der Ringkolben 1 besteht im dargestellten Ausführungsbeispiel aus sechs fest miteinander verbundenen, ringförmigen Kolbenteilen 4 - 9, die gemäß der Darstellung in Fig. 1 so ausgebildet und zusammengesetzt sind, daß jeweils zwischen zwei benachbarten, ringförmigen Kolbenteilen 4,5; 5,6; 6,7; 7,8 und 8,9 ein ringförmiger Fließkanal 10 - 14 gebildet ist. Jeder ringförmige Fließkanal 10 - 14 steht mit einer radial verlaufenden Fließkanalbohrung 15 - 19 in Verbindung, in deren Bereich jeweils ein Extruder angeschlossen ist bzw. mündet. Im dargestellten Ausführungsbeispiel sind an den Ringkolben 1 vier nicht näher gezeichnete Extruder angeschlossen. Diese Extruder besitzen an ihrem Ausstossende jeweils ein kugelförmiges und mit einem Umlenkkanal 20 (Fig. 2) versehenes Anschlußteil 21, welches von einem Andruckstück 22 aufgenommen wird. Das Andruckstück 22 ist beispielsweise mittels Schrauben am Ringkolben 1 bzw. Coextrusionskopf befestigt. Bedarfsweise kann zwischen dem Andruckstück 22 und dem kugelförmigen Anschlußteil 21 eine nicht dargestellte Druckfeder angeordnet sein, über die sichergestellt ist, daß das Anschlußstück 21 stets mit einer genau vorbestimmten Kraft am Ringkolben 1 anliegt.

Zur sicheren Aufnahme der Anschlußteile 21 der einzelnen Extruder am Ringkolben 1 weist derselbe im Bereich der Fließkanalbohrungen 15,17,19 eine pfannenartige Aussparung auf, in der sich das kugelförmige Anschlußteil 21 fluchtend zur Fließkanalbohrung 15,17,19 drehen kann.

Den beiden Fließkanalbohrungen 16,18 ist ein Zwischenstück 23 vorgeordnet, welches die beiden Fließkanalbohrungen 16,18 mit dem Anschlußteil 21 eines einzigen Extruders verbindet. Dies bedeutet, daß die beiden Fließkanalbohrungen 16,18 von einem einzigen Extruder mit einer einheitlichen Materialschmelze beaufschlagt werden.

Die ringförmigen Fließkanäle 10 - 14 gehen, in axialer Richtung gesehen, nacheinander in einen gemeinsamen, ringförmigen Fließkanal 24 über, der konzentrisch im Ringkolben 1 angeordnet ist. Dabei wird der Fließkanal 24 von ringförmigen Vorsprüngen 25, 26 begrenzt, die am vorderen Teil 9 und am hinteren Teil 4 des Ringkolbens 1 angeordnet sind. Der ringförmige Fließkanal 24 erweitert sich allmählich, ausschließlich innerhalb des Ringkolbens 1, im Querschnitt trichterförmig bis annähernd auf die Breite eines Ringspeicherraumes 27, der zwischen dem Speichermantel 2 und der Pinole 3 gebildet ist.

Um sicherzustellen, daß die an dem Ringkolben 1 dreh- bzw. schwenkbar angeschlossenen Extruder die axiale Bewegung des Ringkolbens 1 mitmachen können, sind die Extruder in einem nicht dargestellten Gelenk gelagert, welches zusätzlich noch in axialer Richtung des Extruders verschoben werden kann.

Im erläuterten Ausführungsbeispiel besteht die über die Fließkanalbohrung 15 zugeführte Materialschmelze beispielsweise aus Polyethylen. Diese Materialschmelze bildet dann die innere Schicht des herzustellenden, schlauchartigen Vorformlings bzw. des geblasenen Hohlkörpers. Über die Fließkanalbohrung 19 wird eine aus einem Barrierematerial, z.B. EVOHPA, bestehende Materialschmelze zugeführt, die die Außenschicht des Vorformlings bzw. des geblasenen Hohlkörpers bildet. Über die Fließkanalbohrung 17 gelangt eine Materialschmelze aus Barrierematerial in den Ringkolben 1, die eine sogenannte Zwischenschicht bildet. Über die Fließkanalbohrungen 16,18 wird eine aus einem Haftvermittler bestehende Materialschmelze dem Ringkolben 1 zugeführt. Diese Haftvermittler-Materialschmelze stellt sicher, daß eine gute Verbindung zwischen der Innenschicht und der Zwischenschicht sowie zwischen der Zwischenschicht und der Außenschicht des schlauchartigen Vorformlings bzw. des geblasenen Hohlkörpers erreicht wird.

Schließlich ist noch darauf hinzuweisen, daß die Fließkanalbohrungen 15,19 und damit die Anschlußteile 21 der entsprechenden Extruder zur Bildung der Innenschicht und der Außenschicht um 180 Grad gegeneinander versetzt angeordnet sind. Dadurch wird erreicht, daß im Bereich des Zusammenflusses der ringförmigen Materialschmelze eventuell entstehende Schwachstellen durch Überdeckung ausgeglichen werden, so daß keine Beeinträchtigung des Vorformlings bzw. des geblasenen Hohlkörpers auftritt. Auch die Fließkanalbohrungen 16,18 sind um 180 Grad versetzt gegenüber der Fließkanalbohrung 17 angeordnet. Auch dies führt dazu, daß hier im Bereich des Zusammenflusses der ringförmigen Materialschmelzen eine gegenseitige Überdeckung stattfindet.

## Patentansprüche

1. Verfahren zur diskontinuierlichen Herstellung mehrschichtiger, coextrudierter, schlauchartiger Vorformlinge aus thermoplastischem Kunststoff zur Bildung großvolumiger, mehrschichtiger Hohlkörper in einer geteilten Blasform, bei dem mindestens zwei unterschiedliche, ringförmige Materialschmelzen mittig innerhalb eines Ringkolbens (1) nacheinander und in Extrusionsrichtung zu einer mehrschichtigen Materialschmelze zusammengeführt werden und bei dem diese mehrschichtige Materialschmelze sich trichterförmig erweiternd in einen Ringspeicherraum (27) fließt und anschließend durch den in axialer Richtung bewegbaren Ringkolben (1), der als Coextrusionskopf wirkt und von der mehrschichtigen Materialschmelze nach oben gedrückt wird, über einen Ringdüsenspalt ausgestoßen wird,
dadurch gekennzeichnet,
daß die einzelnen Materialschmelzen vor ihrem Eintritt in den Ringkolben (1) aus ihrer Extrusionsrichtung umgelenkt werden und radial in die entsprechenden Fließkanäle (10 bis 14) einströmen.

2. Verfahren nach Anspruch 1,
dadurch gekennzeichnet,
daß die Materialschmelzen für die Bildung der Außenschicht und der Innenschicht des schlauchartigen Vorformlings um etwa 180 Grad gegeneinander versetzt in den Ringkolben (1) einströmen.

3. Verfahren nach Anspruch 1 oder 2,
dadurch gekennzeichnet,
daß die Materialschmelzen für die Bildung von Zwischen-schichten des schlauchartigen Vorformlings um etwa 180 Grad gegeneinander versetzt in den Ringkolben (1) einströmen.

4. Verfahren nach mindestens einem der Ansprüche 1 - 3,
dadurch gekennzeichnet,
daß die Materialschmelzen für die Bildung der Außenschicht und der Innenschicht um etwa 180 Grad versetzt gegenüber den Materialschmelzen für die Bildung der Zwischenschichten in den Ringkolben (1) einströmen.

5. Verfahren nach mindestens einem der Ansprüche 1 - 4,
dadurch gekennzeichnet,
daß die Materialschmelzen für die Außenschicht und die Innenschicht aus dem gleichen Werkstoff gebildet sind.

6. Verfahren nach mindestens einem der Ansprüche 1 - 5,
dadurch gekennzeichnet,
daß die Materialschmelzen zumindest zweier Zwischenschichten aus dem gleichen Werkstoff gebildet sind.

7. Verfahren nach Anspruch 5 oder 6,
dadurch gekennzeichnet,
daß die aus gleichem Werkstoff bestehenden Materialschmelzen von einem Extruder dem Ringkolben (1) zugeführt werden.

8. Vorrichtung zur Durchführung des Verfahrens nach mindestens einem der Ansprüche 1 - 7, bestehend aus einem coextrusionskopf mit mehreren koaxial angeordneten, ringförmigen und schrägen Fließkanälen (10 bis 14), die mittig und konzentrisch hintereinander in einem Ringkolben (1) angeordnet und über getrennte Fließkanalbohrungen (15 bis 19) mit Extrudern für die unterschiedlichen Materialschmelzen verbunden sind und im Ringkolben (1) in einen gemeinsamen, sich trichterförmig erweiternden Fließkanal (24) übergehen, aus einem den Ringkolben (1) aufnehmenden Ringspeicherraum (27) sowie aus einem sich an den Ringspeicherraum (27) anschließenden Ringkanal mit einem absperrbaren Düsenspalt,
dadurch gekennzeichnet,
daß jeder Extruder ein kugelförmiges und mit einem Umlenkkanal (20) versehenes Anschlußteil (21) aufweist, welches von einem am Ringkolben (1) befestigbaren Andruckstück (22) aufgenommen wird.

9. Vorrichtung nach Anspruch 8,
dadurch gekennzeichnet,
daß der Ringkolben (1) im Bereich jedes Andruckstückes (22) eine pfannenartige Aussparung zur teilweisen Aufnahme des kugelförmigen Anschlußteiles (21) aufweist.

10. Vorrichtung nach Anspruch 8 oder 9,
dadurch gekennzeichnet,
daß zwischen dem Andruckstück (22) und dem kugelförmigen Anschlußteil (21) eine Druckfeder angeordnet ist.

## Claims

1. Method for the discontinuous manufacture of multi-layer, coextruded, tube-like preforms from thermoplastic material for forming large-volume, multi-layer hollow bodies in a split blowing mould, in which at least two different, annular material melts are conducted together centrally within a ring piston (1) successively and in the direction of extrusion to form a multi-layer material melt, and in which this multi-layer material melt flows into a ring storage chamber (27), diverging in a funnel shape, and is then ejected via a ring nozzle gap by the ring piston (1), which is movable in the axial direction and which acts as a coextrusion head and is pushed upwards by the multi-layer material melt, characterised in that the individual material melts before entering the ring piston (1) are deflected out of their direction of extrusion and flow radially into the corresponding flow channels (10 to 14).

2. Method according to claim 1, characterised in that the material melts for forming the outer layer and inner layer of the tube-like preform flow into the ring piston (1) offset from each other by about 180 degrees.

3. Method according to claim 1 or 2, characterised in that the material melts for forming intermediate layers of the tube-like preform flow into the ring piston (1) offset from each other by about 180 degrees.

4. Method according to one or more of claims 1-3, characterised in that the material melts for forming the outer layer and inner layer flow into the ring piston (1) offset by about 180 degrees from the material melts for forming the intermediate layers.

5. Method according to one or more of claims 1-4, characterised in that the material melts for the outer layer and inner layer are formed from the same material.

6. Method according to one or more of claims 1-5, characterised in that the material melts of at least two intermediate layers are formed from the same material.

7. Method according to claim 5 or 6, characterised in that the material melts made of the same material are supplied to the ring piston (1) from an extruder.

8. Apparatus for carrying out the method according to one or more of claims 1-7, consisting of a coextrusion head with several coaxially arranged, annular and oblique flow channels (10 to 14) which are arranged centrally and concentrically one behind the other in a ring piston (1) and connected by separate flow channel bores (15 to 19) to extruders for the different material melts and, in the ring piston (1), go into a common flow channel (24) diverging in a funnel shape, out of a ring storage chamber (27) which receives the ring piston (1) as well as out of a ring channel with a closable nozzle gap adjoining the ring storage chamber (27), characterised in that each extruder comprises a spherical connecting portion (21) which is provided with a deflecting channel (20) and which is held by a contact pressure piece (22) which can be attached to the ring piston (1).

9. Apparatus according to claim 8, characterised in that the ring piston (1) comprises in the region of each contact pressure piece (22) a socket-like recess for partially receiving the spherical connecting portion (21).

10. Apparatus according to claim 8 or 9, characterised in that between the contact pressure piece (22) and the spherical connecting portion (21) is arranged a compression spring.

## Revendications

1. Procédé pour la fabrication discontinue de préformes coextrudées en forme de tuyaux à plusieurs couches, réalisées en une matière thermoplastique pour la formation de corps creux volumineux à plusieurs couches, dans un moule de soufflage divisé, selon lequel on introduit successivement au moins deux masses fondues annulaires différentes de matières en position centrée à l'intérieur d'un piston annulaire (1) et on les réunit dans une direction d'extrusion pour former une masse fondue de matière à couches multiples, et selon lequel cette masse de matière à couches multiples pénètre dans un espace annulaire de stockage (27) avec une forme élargie en entonnoir, et est éjectée par l'intermédiaire d'une buse en forme de fente annulaire, par le piston annulaire (1) qui est mobile dans la direction axiale, agit en tant que tête de coextrusion et est repoussé vers le haut par la masse fondue de matière à couches multiples, caractérisé en ce que
les différentes masses fondues de matières sont déviées à partir de leur direction d'extrusion avant leur entrée dans le piston annulaire (1) et pénètrent radialement dans les canaux de circulation correspondants (10 à 14).

2. Procédé selon la revendication 1, caractérisé en ce
que les masses fondues de matières pour la formation de la couche extérieure et de la couche intérieure de la préforme en forme de tuyau pénètrent dans le piston annulaire (1) en étant décalées réciproquement d'environ 180 degrés.

3. Procédé selon la revendication 1 ou 2, caractérisé en ce que les masses fondues de matières pour la formation de couches intermédiaires de la préforme en forme de tuyau pénètrent dans le piston annulaire (1) en étant décalées réciproquement d'environ 180 degrés.

4. Procédé selon au moins l'une des revendications 1-3, caractérisé en ce
les masses fondues de matière pour la formation de la couche extérieure et de la couche intérieure pénètrent dans le piston annulaire (1) en étant décalées d'environ 180 degrés par rapport aux masses fondues de matières pour la formation des couches intermédiaires.

5. Procédé selon au moins l'une des revendications 1-4, caractérisé en ce
que les masses fondues de matières pour la couche extérieure et la couche intérieure sont formées par la même matière.

6. Procédé selon au moins l'une des revendications 1-5, caractérisé en ce
que les masses fondues de matières sont formées d'au moins deux couches intermédiaires constituées du même matériau.

7. Procédé selon la revendication 5 ou 6, caractérisé en ce
que les masses fondues de matières, constituées par la même matière, sont envoyées par une extrudeuse au piston annulaire (1).

8. Dispositif pour la mise en oeuvre du procédé selon au moins l'une des revendications 1-7, constitué par une tête de coextrusion comportant plusieurs canaux de circulation coaxiaux, annulaires et obliques (10 à 14), qui sont disposés en position centrée et concentriquement les uns derrière les autres dans un piston annulaire (1), et sont reliés, par l'intermédiaire de perçages séparés formant canaux de circulation (15 à 19), à des extrudeuses pour les différentes masses fondues de matières et rejoignent, dans le piston annulaire (1), un canal de circulation commun (24), élargi en forme d'entonnoir, qui est constitué par un espace annulaire de stockage (27) qui loge le piston annulaire (1), ainsi que par un canal annulaire, qui se raccorde à l'espace annulaire de stockage (27) et comporte une buse en forme de fente pouvant être obturée, caractérisé en ce
que chaque extrudeuse possède un élément de raccordement sphérique (21) possédant un canal de renvoi (20) et qui est logé dans un élément de serrage (22) pouvant être fixé sur le piston annulaire (1).

9. Dispositif selon la revendication 8, caractérisé en ce
que le piston annulaire (1) possède, au niveau de chaque élément de serrage (22), un évidement formant cavité servant à loger partiellement l'élément de raccordement sphérique (21).

10. Dispositif selon la revendication 8 ou 9, caractérisé en ce qu'un ressort de pression est disposé entre l'élément de serrage (22) et l'élément de raccordement sphérique (21).
